Europäisches Patentamt

European Patent Office

Office européen des brevets

(11) Veröffentlichungsnummer: **0 251 096 B1**

# EUROPÄISCHE PATENTSCHRIFT

(45) Veröffentlichungstag der Patentschrift: **16.09.92**

(51) Int. Cl.5: **H01S 3/086**

(21) Anmeldenummer: **87108890.2**

(22) Anmeldetag: **22.06.87**

(54) **Optischer Resonator für einen Laser.**

(30) Priorität: **24.06.86 DE 3621057**

(43) Veröffentlichungstag der Anmeldung:
**07.01.88 Patentblatt 88/01**

(45) Bekanntmachung des Hinweises auf die
Patenterteilung:
**16.09.92 Patentblatt 92/38**

(84) Benannte Vertragsstaaten:
**BE CH DE FR GB IT LI NL SE**

(56) Entgegenhaltungen:
**EP-A- 0 177 815**
**WO-A-87/05451**
**DE-A- 3 151 228**

(73) Patentinhaber: **SIEMENS AKTIENGESELL-
SCHAFT**
**Wittelsbacherplatz 2**
**W-8000 München 2(DE)**

(72) Erfinder: **Brumme, Gerhard, Dr. Dipl.-Phys.**
**Am Lochfeld 25**
**W-8088 Eching am Ammersee(DE)**

## Beschreibung

Die Erfindung betrifft einen optischen Resonator für einen Laser, insbesondere für einen $CO_2$-Laser, mit zwei einander gegenüberstehenden Resonatorspiegeln, die an den endseitigen, geschliffenen und optisch polierten Stirnflächen eines Spiegelträgers angeordnet sind, der aus einem Material mit einem sehr niedrigen thermischen Ausdehnungskoeffizienten, z.B. aus Glaskeramik, besteht.

Ein optischer Resonator der eingangs genannten Art ist z.B. durch die DE-PS 31 51 228 bekannt. Hierbei sind die Resonatorspiegel an den endseitigen, geschliffenen und optisch polierten Stirnflächen eines glaskeramischen Spiegelträgers angeordnet. Für eine optimale Rückkopplung muß der absolute Abstand L der beiden Resonatorspiegel voneinander nach der Beziehung $L = n \cdot \frac{\lambda}{2}$ mit n als ganzzahliger Zahl $\gg 1$ sehr genau, z.B. in einem Bereich von $\mu/10$ bis $\mu/100$, eingehalten werden. Diese hohen Anforderungen an die Genauigkeit der Resonatorlänge L sind beim Schleifen und optischen Polieren von Stirnflächen eines Spiegelträgers aber nur sehr schwierig zu erfüllen.

Zur Frequenzabstimmung von Gaslasern ist es bekannt (Laser-handbook, Vol.3, 1979, North-Holland Publishing Company, S.71 bis 78), anstelle des zweiten Resonatorspiegels ein reflektierendes optisches Gitter zu verwenden, durch dessen Winkelstellung zur optischen Achse des Resonators die Wellenlänge der Laserstrahlung abstimmbar ist. Derartige optische Gitter sind jedoch teuer und aufwendig und haben optische Verluste zur Folge.

Ferner ist es bekannt (Kleen/Müller, Laser, Springer-Verlag 1969, Seiten 310 bis 313), zur Frequenzabstimmung bei Gaslasern die Resonatorlänge auf piezoelektrischem Wege einzustellen. Hierbei sind die Resonatorspiegel auf piezokeramischen Halterungen montiert, die eine genaue Abstimmung der Resonatorlänge ermöglichen. Derartige piezoelektrische Längenverstellungen erfordern jedoch einen aufwendigen Regelkreis. Außerdem tritt bei Piezoverstellung sowohl Amplituden- als auch Frequenzmodulation auf, was bei hochstabilen Systemen nicht erwünscht ist. WO-A-8 705 451 stellt stand der Technik nach Art 54 (3) EPÜ dar. Es wird eine aus zwei Ringen bestehende Spiegelhalterung beschrieben, welche durch die relative Rotation der Ringe eine Ausrichtung des Reflektors bewirkt.

Der Erfindung liegt daher die Aufgabe zugrunde, bei einem optischen Resonator der eingangs genannten Art mit möglichst geringem Aufwand und auf einfache Weise eine möglichst genaue, definierte und reproduzierbare Abstimmung des Spiegelabstandes L zu erreichen.

Diese Aufgabe wird bei einem optischen Resonator der eingangs genannten Art gemäß der Erfindung dadurch gelöst, daß der Spiegelträger in einer schräg zur optischen Achse des Resonators verlaufenden Ebene geteilt ist, so daß zwei Trägerteile gebildet sind, die an den einander zugekehrten schrägen Auflageflächen gegeneinander verstellbar sind.

Auf diese Weise wird ein aus zwei Teilen bestehender Spiegelträger mit zwischen dem Träger des ersten Spiegels und dem Träger des zweiten Spiegels vorgesehenen schrägen Verstellflächen geschaffen. Auf diesen keilartigen Verstellflächen sind die beiden Trägerteile gegeneinander verschiebbar, so daß die Resonatorlänge bzw. der absolute Spiegelabstand L in kleinsten Verstellbereichen sehr genau einstellbar ist. Die Verstellflächen zwischen den beiden Teilen des Spiegelträgers lassen sich in einfacher Weise durch schräges Trennen eines zunächst einteiligen Spiegelträgers oder durch Ein- bzw. Anfügen eines Keiles an einem Ende eines einteiligen Spiegelträgers sowie durch Schleifen und optisches Polieren der aneinanderliegenden Verstellflächen herstellen. Der erfindungsgemäße optische Resonator gewährleistet somit bei ganz geringem Aufwand und ohne zusätzliche Hilfsmittel eine äußerst genaue Abstimmung des Spiegelabstandes in kleinsten Verstellbereichen.

Vorteilhafte Ausgestaltungen des Gegenstandes des Anspruchs 1 sind in den Unteransprüchen angegeben.

Die Erfindung ist im folgenden anhand von in der Zeichnung im Schnitt dargestellten Ausführungsbeispielen näher beschrieben.

Fig. 1 zeigt eine erste bevorzugte Ausführungsform eines optischen Plan-Plan-Resonators,

Fig. 2 zeigt eine weitere Ausführungsform eines optischen Plan-Plan-Resonators.

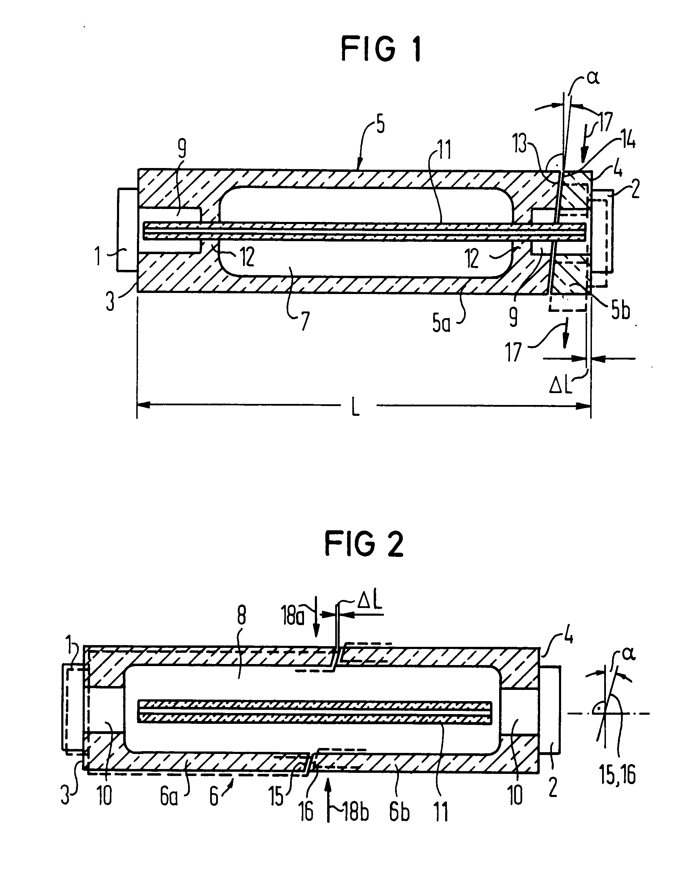

Beiden Ausführungsformen eines optischen Resonators nach den Figuren 1 und 2 ist der grundsätzliche Aufbau gemeinsam. Der optische Resonator besteht aus zwei einander gegenüberstehenden Resonatorspiegeln 1 und 2, die hier als Plan-Parallelspiegel ausgebildet und unmittelbar an den endseitigen, geschliffenen und optisch polierten Stirnflächen 3 und 4 eines blockförmigen Spiegelträgers 5 bzw. 6 angeordnet sind. Dieser besteht aus einem Material mit einem sehr niedrigen thermischen Ausdehnungskoeffizienten, vorzugsweise aus einem glaskeramischen Material.

Als solches Material hat sich die unter dem Warenzeichen "Zerodur" der Fa. Schott bekannte Glaskeramik als besonders geeignet herausgestellt. Der Spiegelträger 5 bzw. 6 weist jeweils eine zentrale Ausnehmung 7 bzw. 8 sowie endseitige Aussparungen 9 bzw. 10 auf und enthält einen ein Aluminiumoxydröhrchen 11 umfassenden Wellenleiter, der bei der Ausführungsform nach Fig. 1 in zwischen der zentralen Ausnehmung 7 und den endseitigen Aussparungen 9 gebildeten Zwischenwänden 12 gehaltert ist, während die Halterung des Aluminiumoxydröhrchens 11 bei der Ausführungsform nach Fig.2 in nicht näher dargestellter geeigneter Weise erfolgt. Die in Fig.1 dargestellte Ausführungsform mit einem Keil 5b ist im Hinblick auf die Wellenleiterhalterung am zweckmäßigsten.

Die Resonatorspiegel 1 und 2 bestehen bei einem $CO_2$-Laser z.B. aus Zinkselenid oder Germanium und werden im einfachsten Fall durch im Inneren des Spiegelträgers 5,6 herrschenden Unterdruck an den Stirnflächen 3 und 4 gehalten. Damit läßt sich in vielen Fällen, z.B. im Laboraufbau, bereits eine ausreichende Fixierung der Spiegel erreichen. In manchen Fällen, z.B. bei in mobilen Geräten oder Anlagen eingesetzten Lasern, kann es jedoch zweckmäßig sein, die Spiegel zusätzlich in ihrer Position zu befestigen und dann durch Klemmung, Kleben oder Löten zu fixieren. Solche Mittel können z.B. gegen die Spiegel andrückende Drahtklammern sein. Diese Mittel sind aber lediglich zusätzliche Befestigungsmittel und haben keinerlei justierende Wirkung. Die Position der beiden Resonatorspiegel 1 und 2, d.h. die Stabilität des Abstandes L der Spiegel voneinander und der Winkelposition zueinander, ist allein durch den Spiegelträger 5 bzw. 6 gewährleistet, der die Spiegel genau parallel und in einem bestimmten Abstand zueinander trägt. Der Spiegelabstand L richtet sich nach der Beziehung $L = n \cdot \frac{\lambda}{2}$ mit n als ganzzahliger Zahl $\gg 1$ und muß für eine optimale Rückkopplung sehr genau eingehalten werden, z.B. in einem Bereich von $\Delta L = \mu/10$ bis $\mu/100$. Um zur Frequenzabstimmung die Resonatorlänge L möglichst genau auf die Wellenlänge der Laserstrahlung abstimmen zu können, ist bei beiden Ausführungsformen der Spiegelträger 5 bzw. 6 in einer schräg zur optischen Achse des Resonators verlaufenden Ebene geteilt. Es sind dadurch zwei Trägerteile 5a, 5b bzw. 6a,6b gebildet, die an den einander zugekehrten schrägen Auflageflächen 13,14 bzw. 15,16 gegeneinander in Richtung der Pfeile 17 bzw. 18a, 18b verstellbar sind. Dadurch kann der Spiegelabstand L und somit die Resonatorlänge in kleinsten Verstellbereichen sehr genau um $\Delta L$ verstellt werden. Als Verstellmittel kommen z.B. Invarschrauben in Betracht, wobei das Spiel der Verstellschrauben durch ein gegenüber der zu bewirkenden Verstellung klein ausgebildetes Übersetzungsverhältnis der keilartigen Verstellung kompensierbar ist. Das Übersetzungsverhältnis kann z.B. mit etwa 1 : 100 bis. 1 : 1000 gewählt werden. Der maximale Verstellbereich $\Delta L$ max kann hierbei etwa 10 $\mu$ betragen, was bei einem Übersetzungsverhältnis von 1 : 100 einen Hub des zweiten Trägerteiles gegenüber dem ersten Trägerteil von 1 mm bedeutet.

Bei der Ausführungsform nach Fig. 1 ist die Trennebene des Spiegelträgers 5 im Bereich des rechten Endes des Spiegelträgers vorgesehen. Es entstehen dadurch ein längeres Trägerteil 5a und ein kleineres Trägerteil, das von einem schmalen Keil 5b gebildet ist. Die beiden Resonatorspiegel 1 und 2 sind also nicht an den zueinander parallelen endseitigen Stirnflächen eines einteiligen Spiegelträgers angeordnet, sondern es ist nur der eine Spiegel 1 direkt auf der endseitigen Stirnfläche 3 des längeren Trägerteiles 5a des Spiegelträgers befestigt, während der andere Spiegel 2 an der endseitigen äußeren Stirnfläche 4 des dazwischengeschalteten Keiles 5b befestigt ist. Dabei ist die äußere Stirnfläche 4 des Keiles 5b parallel zur endseitigen Stirnfläche 3 des längeren Trägerteiles 5a. Die Trennebene des Spiegelträgers 5, welche die beiden aneinanderliegenden schrägen Auflageflächen 13,14 bildet, ist dabei vorzugsweise um einen sehr kleinen Winkel gegen eine senkrecht zur optischen Achse des Resonators verlaufende Ebene geneigt, hier also schräg zu den parallelen Stirnflächen 3 und 4 des Spiegelträgers 5, wobei der Neigungswinkel $\alpha$ zwischen Null und einigen Bogensekunden bzw. Bogenminuten liegt. Außerdem sind die aneinanderliegenden, schrägen Auflageflächen 13,14 geschliffen und optisch poliert, so daß zur Verstellung des Keiles 5b gegen das Trägerteil 5a genau plane Keilflächen gebildet sind. Die Verstellung des Keiles 5b, d.h. die Einstellung des Spiegelabstandes L und damit die Abstimmung der Resonatorlänge auf die Wellenlänge der Laserstrahlung ist im allgemeinen nur einmal erforderlich, wobei die Verstellung gegebenenfalls in einer Führung erfolgen kann, die nur eine geradlinige Verstellung der Trägerteile gegeneinander ermöglicht und eine evtl. mögliche Verdrehung der Trägerteile gegeneinander verhindert.

Bei der Ausführungsform nach Fig.2 besteht der mit zwei zueinander parallelen endseitigen Stirnflächen 3 und 4 ausgebildete Spiegelträger 6 nicht aus einem längeren Trägerteil und einem schmalen Keil, sondern aus zwei etwa gleich großen Trägerteilen 6a und 6b, d.h. die Trennebene befindet sich beim Spiegelträger 6 etwa in dessen Mitte. Ansonsten sind die Auflageflächen 15 und 16 der Trägerteile 6a und 6b hinsichtlich ihrer weiteren Ausgestaltung (Neigung, Oberflächenbeschaffenheit) wie die Auflageflächen 13 und 14 bei der Ausführungsform nach Fig.1 ausgebildet.

Die Verstellung erfolgt bei der Ausführungsform nach Fig.2 z.B. dadurch, daß - wie bei Fig.1 - eines der Trägerteile, z.B. 6a, gegen das andere feststehende Trägerteil, z.B. 6b, auf den Auflageflächen 15,16 in Richtung des Pfeiles 18a verschoben wird, so daß sich die Resonatorlänge wieder um $\Delta L$ verändert. Wie in Fig.2 strichliert angedeutet, ist es aber auch möglich, das zweite Trägerteil 6b gegen das feststehende Trägerteil 6a zu verstellen.

Grundsätzlich sind - wie auch bei der Ausführungsform nach Fig.1 - beide Trägerteile gegeneinander verstellbar.

**Patentansprüche**

1. Optischer Resonator für einen Laser, insbesondere für einen $CO_2$-Laser, mit zwei einander gegenüberstehenden Resonatorspiegeln (1,2), die an den endseitigen, geschliffenen und optisch polierten Stirnflächen eines Spiegelträgers (5,6) angeordnet sind, der aus einem Material mit einem sehr niedrigen thermischen Ausdehnungskoeffizienten, z.B. aus Glaskeramik besteht,
   **dadurch gekennzeichnet,** daß der Spiegelträger (5 bzw. 6) in einer schräg zur optischen Achse des Resonators verlaufenden Ebene geteilt ist, so daß zwei Trägerteile (5a,5b bzw. 6a,6b) gebildet sind, die an den einander zugekehrten schrägen Auflageflächen (13,14 bzw. 15,16) zur Abstimmung des Spiegelabstandes gegeneinander verstellbar sind.

2. Optischer Resonator nach Anspruch 1,
   **dadurch gekennzeichnet,** daß die Trennebene des Spiegelträgers (5) im Bereich eines Endes des Spiegelträgers vorgesehen ist und der kleinere Trägerteil aus einem Keil (5b) besteht.

3. Optischer Resonator nach Anspruch 1 oder 2,
   **dadurch gekennzeichnet,** daß die Trennebene des Spiegelträgers (5,6) um einen sehr kleinen Winkel ($\alpha$) gegen eine senkrecht zur optischen Achse des Resonators verlaufende Ebene geneigt ist und der Neigungswinkel ($\alpha$) zwischen Null und einigen Bogensekunden bzw. Bogenminuten liegt.

4. Optischer Resonator nach Anspruch 3,
   **dadurch gekennzeichnet,** daß die aneinanderliegenden schrägen Auflageflächen (13,14 bzw.15,16) der beiden Teile (5a,5b bzw. 6a,6b) des Spiegelträgers (5 bzw. 6) geschliffen und optisch poliert sind.

**Claims**

1. Optical resonator for a laser, preferably for a $CO_2$ laser, having two opposed resonator mirrors (1, 2) which are arranged at the ground and optically polished end faces at the ends of a mirror carrier (5, 6) which consists of a material having a very low coefficient of thermal expansion, for example of glass ceramic, characterised in that the mirror carrier (5, 6) is divided in a plane extending obliquely relative to the optical axis of the resonator, so that two carrier parts (5a, 5b or 6a, 6b) are formed which for the purpose of tuning the mirror spacing can be adjusted relative to one another on the mutually facing, oblique seating surfaces (13, 14 or 15, 16).

2. Optical resonator according to Claim 1, characterised in that the dividing plane of the mirror carrier (5) is provided in the region of one end of the mirror carrier, and the smaller carrier part consists of a wedge (5b).

3. Optical resonator according to Claim 1 or 2, characterised in that the dividing plane of the mirror carrier (5, 6) is inclined at a very small angle ($\alpha$), relative to a plane extending perpendicular to the optical axis of the resonator, and the angle of inclination ($\alpha$) is between zero and a few arc seconds or arc minutes.

4. Optical resonator according to one of Claims 1 to 3, characterised in that the abutting oblique seating surfaces (13, 14 or 15, 16) of the two parts (5a, 5b or 6a, 6b) of the mirror carrier (5, 6) are ground and optically polished.

**Revendications**

1. Résonateur optique pour un laser, notamment pour un laser à $CO_2$, comportant deux miroirs opposés (1,2) qui sont disposés sur les faces frontales terminales, meulées et présentant un poli optique d'un porte-miroirs (5,6) qui est réalisé en un matériau possédant un coefficient de dilatation thermique très faible, par exemple un vitrocérame,
   caractérisé par le fait que le porte-miroirs (5 ou 6) est subdivisé dans un plan oblique par rapport à l'axe optique du résonateur de sorte qu'il comprend deux parties (5a,5b ou 6a,6b), qui peuvent être déplacées l'une par rapport à l'autre au niveau des surfaces obliques d'application (13,14 ou 15,16), qui se font face, de manière à permettre le réglage de la distance entre les miroirs.

2. Résonateur optique suivant la revendication 1, caractérisé par le fait que le plan de séparation du porte-miroirs (5) est prévu au niveau d'une extrémité du porte-miroirs et que la partie la plus petite du support est formée par un coin (5b).

3. Résonateur optique suivant la revendication 1 ou 2, caractérisé par le fait que le plan de séparation du porte-miroirs (5,6) est incliné d'un angle ($\alpha$) très faible par rapport à un plan s'étendant perpendiculairement à l'axe optique du résonateur, et que l'angle d'inclinaison ($\alpha$) est compris entre la valeur nulle et quelques secondes ou minutes d'arc.

4. Résonateur optique suivant l'une des revendications 1 à 3, caractérisé par le fait que les surfaces d'application obliques contiguës (13,14 ou 15,16) des parties (5a,5b ou 6a,6b) du porte-miroirs (5,6) sont meulées et présentent un poli optique.

# FIG 1

# FIG 2